# EUROPÄISCHE PATENTSCHRIFT

(11) **EP 1 691 509 B1**
(45) Veröffentlichungstag und Bekanntmachung des Hinweises auf die Patenterteilung: **02.04.2008**
(21) Anmeldenummer: 05002601.2
(22) Anmeldetag: 08.02.2005
(51) Int. Cl.: H04L 12/26, G06F 11/36

(54) **Lasttestgerät und Verfahren zur Erstellung eines Lasttests zum Testen eines Telekommunikationssystems**
Load test apparatus and method for creating load tests for testing a telecommunication system
Dispositif de mesure de charge et procédé pour élaborer des mesures de charge pour tester un système de télécommunication

(43) Veröffentlichungstag der Anmeldung: 16.08.2006
(73) Patentinhaber: Tektronix International Sales GmbH, 8212 Neuhausen (CH)
(72) Erfinder: Wagner, Ute, 14641 Falkenrehde (DE); Blümcke, Michael, 13583 Berlin (DE); Wiedemann, Mike, 14612 Falkensee (DE); Laake, Heinz-Joachim, 16727 Oberkrämer (OT) Bärenklau (DE); Schönfeld, Christian, 12205 Berlin (DE); Hain, Christian, 12203 Berlin (DE); Zander, Christian, 14612 Falkensee (DE); Martens, Kristian, 13158 Berlin (DE)
(74) Vertreter: Schurack, Eduard F.

(56) Entgegenhaltungen:
- US-A1- 2003 046 029
- US-A1- 2004 073 890
- US-B1- 6 421 822
- KREUER D: "Applying test automation to type acceptance testing of telecom networks: a case study with customer participation" AUTOMATED SOFTWARE ENGINEERING, 1999. 14TH IEEE INTERNATIONAL CONFERENCE ON. COCOA BEACH, FL, USA 12-15 OCT. 1999, LOS ALAMITOS, CA, USA,IEEE COMPUT. SOC, US, 12. Oktober 1999 (1999-10-12), Seiten 216-223, XP010358483 ISBN: 0-7695-0415-9

## Beschreibung

Die vorliegende Erfindung betrifft ein Lasttestgerät und ein Verfahren zur Erstellung eines Lasttests zum Testen eines Telekommunikationssystems, das eine Vielzahl von Netzwerkelementen und Subscriber umfasst.

Telekommunikationssysteme weisen eine Vielzahl von Netzwerkelementen auf, wobei die Kommunikation einerseits zwischen Netzwerkelementen stattfindet, andererseits über die Netzwerkelemente zwischen Subscribern, unter Verwendung von beispielsweise Handys und anderen Arten von Endgeräten. Wenn eine Vielzahl von Benutzern gleichzeitig kommuniziert, kann es passieren, dass ein bestimmtes Netzwerkelement die Masse an Daten nicht mehr bewältigen kann und dadurch Daten irreversibel verloren gehen. Bevor daher ein Netzwerkelement in Betrieb geht, wird es umfangreichen Lasttests unterzogen, um die Belastungskapazität bei unterschiedlichsten Randbedingungen zu ermitteln und, sofern nötig, die Auslegung zu überarbeiten. Zur Durchführung von Lasttests werden Lasttestgeräte verwendet, die in der Lage sind, die Netzwerkumgebung des zu testenden Netzwerkelements sowie eine Vielzahl von Subscribern und deren Verhalten zu simulieren.

Zur Durchführung eines Lasttests kann der Benutzer im Stand der Technik einen Testfall kreieren, beispielsweise unter Verwendung des Verfahrens, das in der Anmeldung US 10/817,734, eingereicht am 2. April 2004 unter der Bezeichnung "Timeline Presentation and Control of Simulated Load Traffic" sowie in der am 8. Februar 2005 unter dem internen Aktenzeichen 28995 unter dem gleichen Titel eingereichten europäischen Patentanmeldung beschrieben ist. Ein Testfall, im nachfolgenden Testcase genannt, ist ein in sich abgeschlossener Test, in dem die Netzwerkumgebung des Netzwerkelements beschrieben ist, in dem die gesamte Initialisierung der simulierten Netzwerkumgebung vorgenommen wird, in dem unterschiedlichste Gruppen von Subscribern definiert sind, die sich insbesondere durch das übertragene Payload Volumen, die Art der übertragenen Daten, beispielsweise VOICE, MMS, IP, FTP, ihre Mobilität und in dem sich Ungereimtheiten, wie nicht vollständig standardkonforme Endgeräte oder schlechte Übertragungsbedingungen, wie beispielsweise ein Tunnel, spezifizieren lassen. Nach dem Ablauf eines Testfalls werden Testergebnisse bereitgestellt, die von einem Testanalysator gesichtet und ausgewertet werden. Hierbei ist zu berücksichtigen, dass infolge der Komplexität der einzelnen Phasen eines Lasttests für unterschiedliche Phasen unterschiedlich qualifizierte Personen zuständig sind: Für die Erstellung eines Tests ist ein Testentwickler zuständig. An ihn wird herangetreten, um ihm die Testanforderungen mitzuteilen. Die Anpassung an die Laborbedingungen beim Kunden, beispielsweise die Einstellung der Schnittstellen, der Protokollstacks, der Belastungsprofile des jeweils zu testenden Netzwerkelements, etc. wird von einem Testvorbereiter wahrgenommen. Schließlich wird der Test beim Kunden von einem Testausführer ausgeführt, der den Ablauf überwacht und, sofern Probleme auftreten, den Testcase anhält und die für ihn erkennbaren Probleme dem Testentwickler mitteilt. Schließlich, sofern der Test durchläuft, tritt der bereits erwähnte Testanalysierer auf den Plan und analysiert die Testergebnisse im Hinblick darauf, ob und warum Ungereimtheiten aufgetreten sind. Der von ihm erstellte Fehlerreport enthält nicht nur die Ungereimtheit, sondern auch eine Analyse des die Ungereimtheit umgebenden Kontexts, so dass der Testentwickler in die Lage versetzt wird, den Lasttest so zu modifizieren, dass der Ungereimtheit begegnet werden kann.

Da der Testausführer vor Ort gewöhnlich ein geringes Fachwissen aufweist, insbesondere kein Wissen, dass ihm erlauben würde, Aufgaben des Testentwicklers und des Testvorbereiters zu übernehmen, wird im Stand der Technik nach der Analyse des Tests durch den Testanalysator, der Test durch den Testentwickler modifiziert, der modifizierte oder ein anderer Testfall vom Testvorbereiter angepasst und vom Testausführer ausgeführt. Wie ohne weiteres nachzuvollziehen, ist dies eine Vorgehensweise, die einen hohen Zeitaufwand erfordert und damit mit hohen Kosten einhergeht. Eine Umgehungsmöglichkeit bestünde darin, dem Testausführer durch Schulungen das Wissen eines Testentwicklers, Testvorbereiters und Testanalysators zu vermitteln, was jedoch einerseits mit hohem Kostenaufwand einhergeht, andererseits nicht erfolgversprechend ist, da die einzelnen genannten Fachgebiete häufig Änderungen unterworfen sind, die ohne Spezialisierung kaum alle von einer Person verfolgt werden können. Insbesondere mangelt es infolge von zu wenig Übung ohne Spezialisierung an dem gewissen Gespür, das die Spezialisten auszeichnet, wenn es um die Erkennung von Problemen und die Modifikation von Testläufen zur Behebung von Problemen geht.

In diesem Zusammenhang sei auf die US 2003/0046029 A1 verwiesen, die ein Verfahren zum Entwickeln und Testen von Software offenbart, das die Zusammenarbeit von Entwicklern und Testingenieuren in diesem Prozess erleichtern soll. Dazu werden "White Box"- und "Black Box"-Tests verschmolzen. Um die Sicherheit gegenüber dem Wandern von Fehlern über einzelne Phasen des Softwareentwicklungs- und Testzyklusses hinweg zu erhöhen, werden so genannte "Probe Libraries" verwendet, die von Testern und Entwicklern in verschiedenen Tests immer wieder verwendet werden können. Beim Erstellen eines Testszenarios können einzelne Testfälle kombiniert werden. Dazu werden in einer grafischen Benutzeroberfläche mögliche Testfälle angeboten, aus denen einzelne Testfälle ausgewählt werden können, um sie zu einem so genannten "Testset" hinzuzufügen. Dabei werden auch bedingte Abhängigkeiten und "Execution Branching" unterstützt.

Außerdem sei noch auf den Artikel "Applying Test Automation to Type Acceptance Testing of Telecom Networks: A Case Study with Customer Participation" von Dieter Kreuer in AUTOMATED SOFTWARE ENGINEERING, 1999, 14TH IEEE INTERNATIONAL CONFERENCE, COCOA BEACH, FL, USA 12-15 OCT. 1999, LOS ALAMITOS, CA, USA, IEEE COMPUT. SOC., US, 12. Oktober 1999, Seiten 216-223, XP010358483 verwiesen. Dieser Artikel beschreibt eine Untersuchung zu dem durch die Automatisierung von einzelnen Testfällen im Bereich des Testens von Telekommunikationsnetzwerken erreichbaren Zeitgewinn.

Die Aufgabe der vorliegenden Erfindung besteht darin, das eingangs genannte Lasttestgerät bzw. das eingangs genannte Verfahren derart weiterzubilden, dass damit eine ökonomischere Durchführung von Lasttests ermöglicht wird.

Diese Aufgabe wird gelöst durch ein Verfahren mit den Merkmalen von Patentanspruch 1 und durch ein Lasttestgerät mit den Merkmalen von Patentanspruch 6.

Dabei können die Schritte a) und b) des erfindungsgemäßen Verfahrens solange wiederholt werden, bis der gewünschte Testplan fertig gestellt ist. Beim Einfügen der Testcases werden automatisch Verbindungslinien zwischen den einzelnen Testcases eingezeichnet.

Die vorliegende Erfindung basiert auf der Erkenntnis, dass eine ökonomischere Durchführung von Lasttests ermöglicht wird, wenn die Möglichkeit bereitgestellt wird, mehrere in sich abgeschlossene Testcases in einen Testplan zusammenzufassen. In dem Testplan ist die Reihenfolge festgelegt, mit der die einzelnen Testcases durchlaufen werden. Weil den Testcases Kennungen zugeordnet sind, kann auf einfache Weise grafisch ein Testplan erstellt werden. Dies stellt die Möglichkeit bereit, Testcases ihrer Komplexität entsprechend aneinander zu reihen. Da jeder Testcase in sich abgeschlossen ist, kann dieser Testplan dem Testausführer in die Hand gegeben werden und dieser kann, ohne dass zwischenzeitlich eine Rücksprache mit dem Testanalysator, dem Testentwickler oder dem Testvorbereiter nötig wäre, eine Vielzahl von Testcases unterschiedlicher Komplexität, insbesondere steigender Komplexität, am zu testenden Netzwerkelement ausführen. Dies eröffnet die Möglichkeit, Fehler wesentlich genauer einzugrenzen, da die Deltas, d. h., die Unterschiede zwischen den Testparametern der einzelnen Testcases kleiner gewählt werden können als im Stand der Technik, bei dem für jeden Testfall eine zeitaufwendige Prozedur durchlaufen werden muss.

Insbesondere werden bei der vorliegenden Erfindung auf einer Benutzeroberfläche Mittel bereitgestellt zum Einbau einer Bedingung in Abhängigkeit eines Testergebnisses eines Testcases und einer zugehörigen Folge in die Abfolge der Testcases. Damit können auf einfache Art und Weise Abhängigkeiten zwischen den Testcases in den Testplan eingebaut werden.

Die Erfindung zeichnet sich ferner dadurch aus, dass für den Einbau von Bedingungen und Folgen auf einer Benutzeroberfläche eine Vielzahl von Bedingungen zur Auswahl durch den Benutzer angezeigt werden und nach Auswahl einer Bedingung eine Vielzahl von Folgen, insbesondere von zu der ausgewählten Bedingung zugehörigen Folgen, zur Auswahl durch den Benutzer angezeigt wird. Damit stellt die vorliegende Erfindung Möglichkeiten bereit, wie selbst derart komplizierte Eingriffe in die Abfolge einer Vielzahl von Testcases von einer Person ohne Programmierkenntnisse, beispielsweise einem Testausführer ohne großes Vorwissen, vorgenommen werden können. Dies eröffnet insbesondere die Möglichkeit, dass bei Bereitstellen einer Bibliothek von Testcases in einer Datenbank diese beim Kunden, beispielsweise beim Hersteller eines Netzwerkelements oder dem Betreiber eines Telekommunikationsnetzwerks, ohne Rücksprache mit Testentwicklern und Testvorbereitern durchgeführt werden können.

Bei einem Lasttest zur Verifizierung von GPRS-Signalisierungsfunktionalitäten, ein sogenannter SAU (Simultaneous attached users) -Test, können beispielsweise in einem Testplan folgende Testcases aneinander gefügt sein:
a) 50.000 Subscriber, statisch (d. h., keine Mobilität), GPRS Attach;
b) 50.000 Subscriber, statisch, GPRS Attach und PDP Context Activation;
c) 100.000 Subscriber, statisch, GPRS Attach und PDP Context Activation;
d) 150.000 Subscriber, statisch, GPRS Attach und PDP Context Activation;
e) 50.000 Subscriber mit RAU (routing area update), GPRS Attach;
f) 50.000 Subscriber mit RAU, GPRS Attach und PDP Context Activation;
g) 100.000 Subscriber mit RAU, GPRS Attach und PDP Context Activation ;
h) 150.000 Subscriber mit RAU, GPRS Attach und PDP Context Activation.

Mit Bezug auf diesen Testplan, kann, wenn beispielsweise Testcase c) nicht erfolgreich abgeschlossen wird, der Testcase d), der in diesem Fall keinen Sinn macht, übersprungen werden, um im Testplan mit dem Testcase e) fortzusetzen. Dies resultiert in einer weiteren Erhöhung der Ökonomie bei der Durchführung von Lasttests an Netzwerkelementen.

Ein anderes Beispiels wäre folgendes: Testcase a) wäre ein Test an der lub-Schnittstelle eines UMTS-Netzwerks, bei der Prozeduren für einen NodeB Restart enthalten sind. Nur wenn Testcase a) korrekt und ohne eine vordefinierte Fehlerrate zu überschreiten durchlaufen wurde, soll der nächste Testcase b) ausgeführt werden, bei dem an der lub-Schnittstelle des UMTS-Netzwerks ein Attach von 20.000 Subscribern simuliert wird. Eine Ausführung von Testcase b) in diesem Beispiel würde keinen Sinn machen, wenn Testcase a) nicht erfolgreich absolviert wurde. Diese Voraussetzung kann gemäß der vorliegenden Erfindung auf einfache Art und Weise bei der Erstellung eines Testplans berücksichtigt werden.

Eine besonders bevorzugte Ausführungsform zeichnet sich dadurch aus, dass auf der Benutzeroberfläche Mittel bereitgestellt werden, mit denen die Reihenfolge der Kennungen des Testplans geändert werden können. Wird im ersten angeführten Beispiel festgestellt, dass die Testcases a) und b) zwar problemlos durchlaufen worden sind, sich beim Testfall c) aber ein Problem gezeigt hat, so können zur Überprüfung, ob es an der Anzahl der Subscriber liegt, beispielsweise die Testcases e) und f) vor den Testcases c) und d) angeordnet werden. Dies ist erfindungsgemäß auf einfachste Art und Weise möglich, ohne die Kenntnis von Steuerungsbefehlen oder definierten Skriptbefehlen zur Steuerung.

Selbst wenn man in Weiterbildung des Stands der Technik sogenannte Batch-Skripte vorsehen würde, um eine Reihenfolge anzugeben, in der verschiedene Testcases ablaufen sollen, so müsste ein Anwender dennoch extra eine Beschreibungssprache erlernen, um die Testablaufbeschreibung in eine vordefinierte Skriptsprache umzusetzen. Um dies zu ermöglichen müssten demnach auf Seiten des Testausführers Programmierkenntnisse als Voraussetzung zum Konfigurieren eines Tests, der mehrere Testcases umfasst, vorhanden sein. Im Gegenzug hierzu sind bei der Erfindung lediglich Kennungen, die jeweils einem Testcase entsprechen, graphisch aneinander zu reihen. Den Kennungen der Testcases sind Beschreibungsdateien zugeordnet, die gemäß dem grafisch dargestellten Testplan zu einer ausführbaren Abfolge von Testcases verknüpft werden.

Die Erfindung ermöglicht, dass der Benutzer die Reihenfolge der einzelnen Testcases schnell überblicken kann. Bei der vorliegenden Erfindung sieht der Benutzer den Testablauf deutlich grafisch vor sich, während bei Verwendung Batch-Skripten ein Testablauf nur "im Kopf" oder in Form einer Skriptdatei vorhanden wäre.

Um die Übersichtlichkeit in dem grafisch dargestellten Testplan weiter zu erhöhen, werden bevorzugt grafische Entsprechungen für die Bedingung und die Folge in den auf der Anzeigeeinheit dargestellten Testplan eingebaut. Obwohl der auf der Anzeigeeinheit dargestellte Testplan das Aussehen einer schnell hingeworfenen Skizze für einen Lasttest gleicht, handelt es sich bereits um einen ausführbaren Testplan.

Um den Lasttest gemäß dem Testplan zu starten, können auf der Benutzeroberfläche Mittel zum Starten des Lasttest gemäß dem erstellten Testplan bereitgestellt werden.

Die im Vorhergehenden am Beispiel des erfindungsgemäßen Verfahrens dargestellten Vorteile der Erfindung gelten selbstverständlich ohne Einschränkung für das erfindungsgemäße Lasttestgerät. Zur Durchführung der beschriebenen Verfahrensschritte sind entsprechende Mittel im Lasttestgerät vorgesehen.

Weitere vorteilhafte Ausführungsformen sind in den Unteransprüchen beschrieben.

Im nachfolgenden werden Ausführungsbeispiele der Erfindung unter Bezugnahme auf die beigefügten Zeichnungen näher beschrieben. Es zeigen:
- Figur 1: eine schematische Überblicksdarstellung betreffend die Erstellung eines Testplans;
- Figur 2: eine erste Benutzeroberfläche eines Ausführungsbeispiels eines erfindungsgemäßen Testgeräts;
- Figur 3: eine zweite Benutzeroberfläche eines Ausführungsbeispiels eines erfindungsgemäßen Testgeräts;
- Figur 4: eine dritte Benutzeroberfläche eines Ausführungsbeispiels eines erfindungsgemäßen Testgeräts;
- Figur 5: eine vierte Benutzeroberfläche eines Ausführungsbeispiels eines erfindungsgemäßen Testgeräts;
- Figur 6: eine fünfte Benutzeroberfläche eines Ausführungsbeispiels eines erfindungsgemäßen Testgeräts;
- Figur 7: eine sechste Benutzeroberfläche eines Ausführungsbeispiels eines erfindungsgemäßen Testgeräts;
- Figur 8: eine siebte Benutzeroberfläche eines Ausführungsbeispiels eines erfindungsgemäßen Testgeräts;

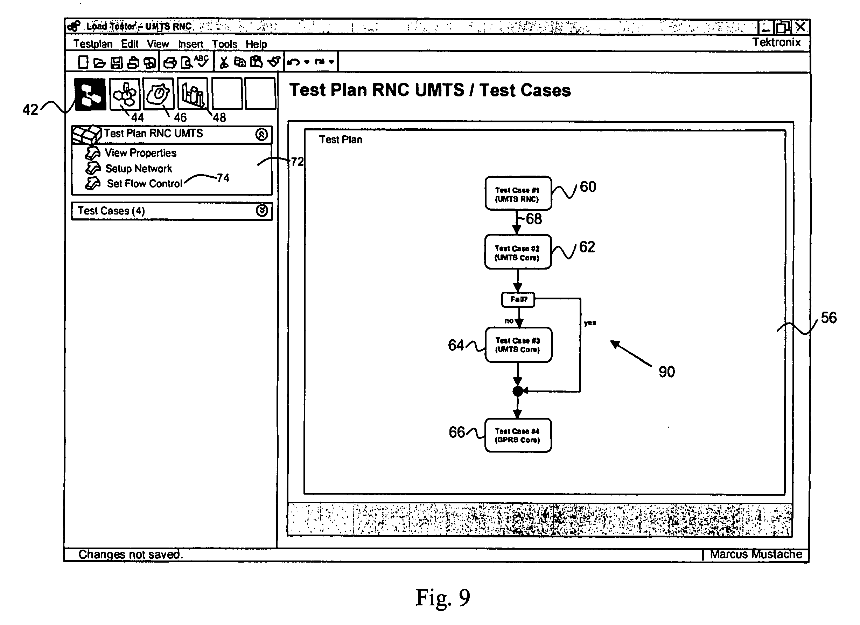

- Figur 9: eine achte Benutzeroberfläche eines Ausführungsbeispiels eines erfindungsgemäßen Testgeräts;
- Figur 10: eine neunte Benutzeroberfläche eines Ausführungsbeispiels eines erfindungsgemäßen Testgeräts; und
- Figur 11: eine schematische Darstellung eines erfindungsgemäßen Lasttestgeräts.

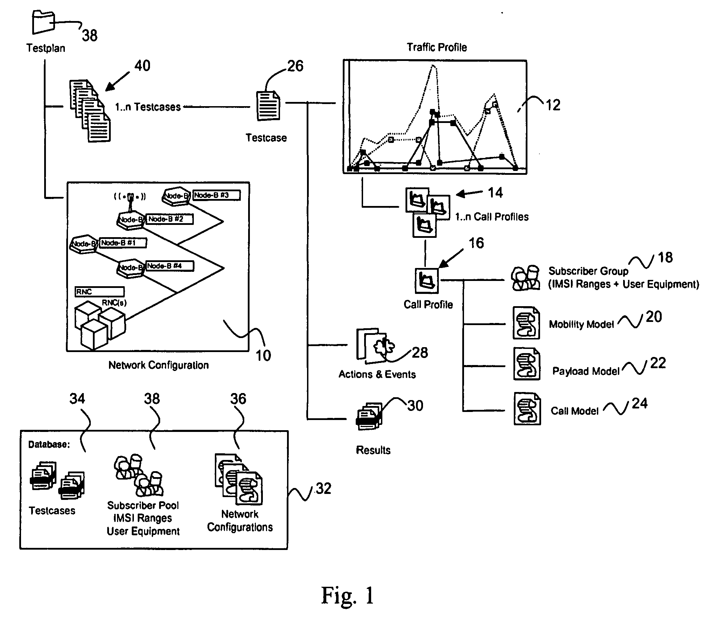

Figur 1 zeigt in schematischer Darstellung die Vielzahl von Einzelkomponenten, die in einem Testplan Berücksichtigung finden. Erst das Verständnis der daraus resultierenden hohen Komplexität erlaubt die Tragweite der Erfindung im Ansatz abzuschätzen. Vorliegend wird die Konfiguration des das zu testende Netzwerkelement umgebenden Netzwerks 10, da es für alle Testcases dasselbe ist, separat von den Subscribern erfasst und in einer Speichervorrichtung abgelegt. Im Traffic Profile 12 sind eine Vielzahl von Call Profiles 14 zusammengefasst, wobei sich jedes Call Profile, wie durch das Bezugszeichen 16 zum Ausdruck gebracht, zusammensetzt unter Berücksichtigung unterschiedlicher Subscriber-Gruppen 18, die sich beispielsweise unterscheiden durch die IMSI Bereiche und das von ihnen verwendete Equipment, durch unterschiedliche Mobilitätsmodelle 20, durch unterschiedliche Payload-Modelle 22 sowie durch unterschiedliche Call Modelle 24. In einem einzelnen Testcase 26 finden neben den Traffic Profiles verschiedene Aktionen und Ereignisse 28, beispielsweise Verbindungsabbrüche infolge eines Tunnels, sowie optional Ergebnisse 30, beispielsweise vorhergehender Testcases Berücksichtigung. In dem in Figur 1 links unten dargestellten Kasten 32 ist zum Ausdruck gebracht, dass in einer Datenbank verschiedene Testcases 34 sowie verschiedene Netzwerkkonfigurationen 36 abgelegt sind, die bei der Erstellung eines Testplans 38, der sich aus mehreren Testcases zusammensetzt, wie durch das Bezugszeichen 40 zum Ausdruck gebracht ist, Verwendung finden können. Die mit dem Bezugszeichen 38 gezeigte Hinterlegung von verschiedenen Subscriber-Gruppen in der Datenbank ist im Hinblick auf die Erfindung von untergeordneter Bedeutung, sie findet vielmehr Anwendung bei der Erstellung eines einzelnen Testcases 26, wie beispielsweise in der oben bereits erwähnten Patentanmeldung US 10/817,734, eingereicht am 2. April 2004 unter der Bezeichnung "Timeline Presentation and Control of Simulated Load Traffic" sowie in der am 8. Februar 2005 unter dem internen Aktenzeichen 28995 unter dem gleichen Titel eingereichten europäischen Patentanmeldung ausgeführt.

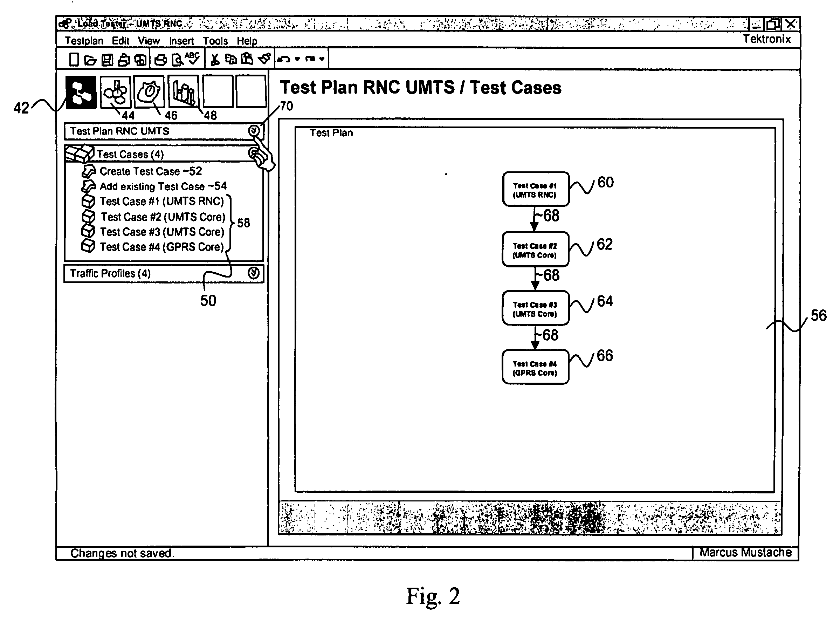

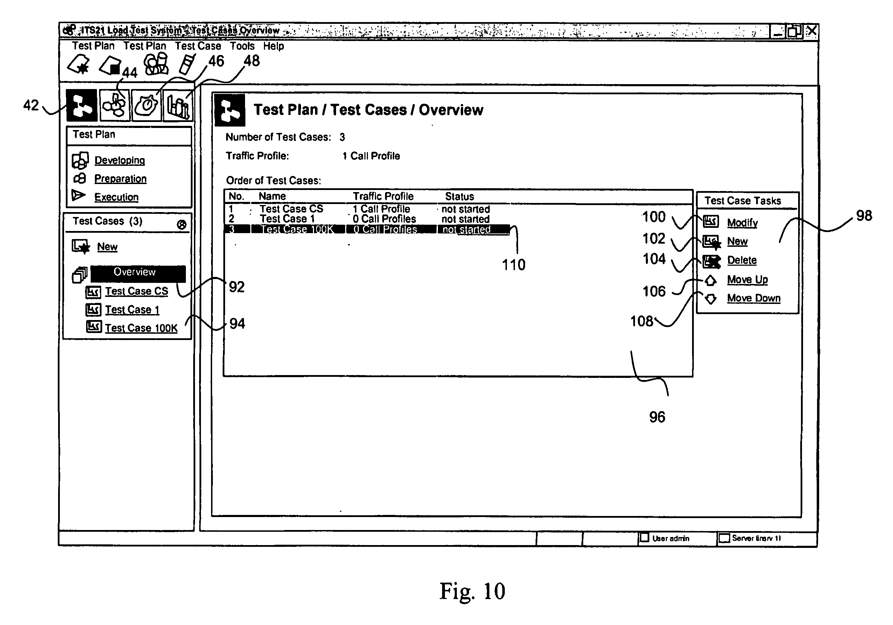

Figur 2 zeigt eine Benutzeroberfläche, bei der mit der Funktionalität 42 zum Ausdruck gebracht wird, dass vorliegend die Lasttestphase "Testentwicklung" aktiviert wurde. Die Funktionalität 44 würde der Testphase "Testvorbereitung", die Funktionalität 46 der Testphase "Testausführung" und die Funktionalität 48 der Testphase "Testanalyse" entsprechen. In einem ersten Fenster 50 sind verschiedene Funktionalitäten aktivierbar, die für die Erstellung eines Testplans von Relevanz sind. Die Funktionalität 52 ermöglicht bei ihrer Aktivierung die Erstellung eines Testcases, während über die Funktionalität 54 ein existierender Testcase aus der Datenbank zum im Fenster 56 dargestellten Testplan hinzugefügt werden kann. Gemäß der Information im Bereich 58 des Fensters 50 wurden vier Testcases ausgewählt, die grafisch im Fenster 56 dargestellt sind, und zwar durch die Blöcke 60 (Testcase #1), 62 (Testcase #2), 64 (Testcase #3) und 66 (Testcase #4). Durch Pfeile 68 zwischen den Blöcken 60 bis 66, die automatisch eingefügt werden, ist die Reihenfolge der Testcases innerhalb des Testplans zum Ausdruck gebracht. Eine Änderung der Reihenfolge kann durch Anklicken eines Testcases innerhalb des Bereichs 58, Neupositionierung und Ablegen durch erneutes Anklicken auf einem Zeigegerät bewirkt werden. Die neue Reihenfolge wird daraufhin unmittelbar im Fenster 56 wiedergegeben. Auf eine andere Art der Umstellung der Reihenfolge wird mit Bezug auf die Figur 10 noch näher eingegangen werden.

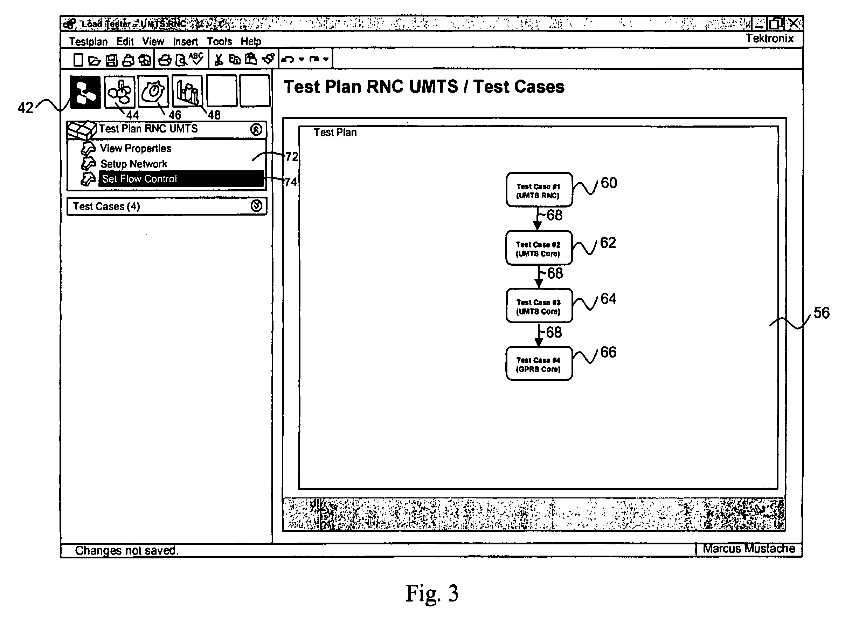

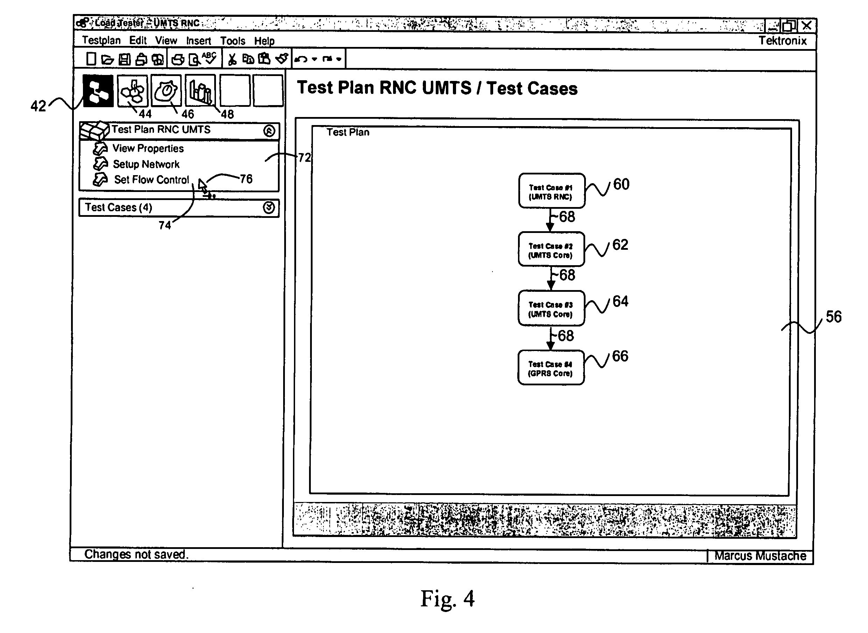

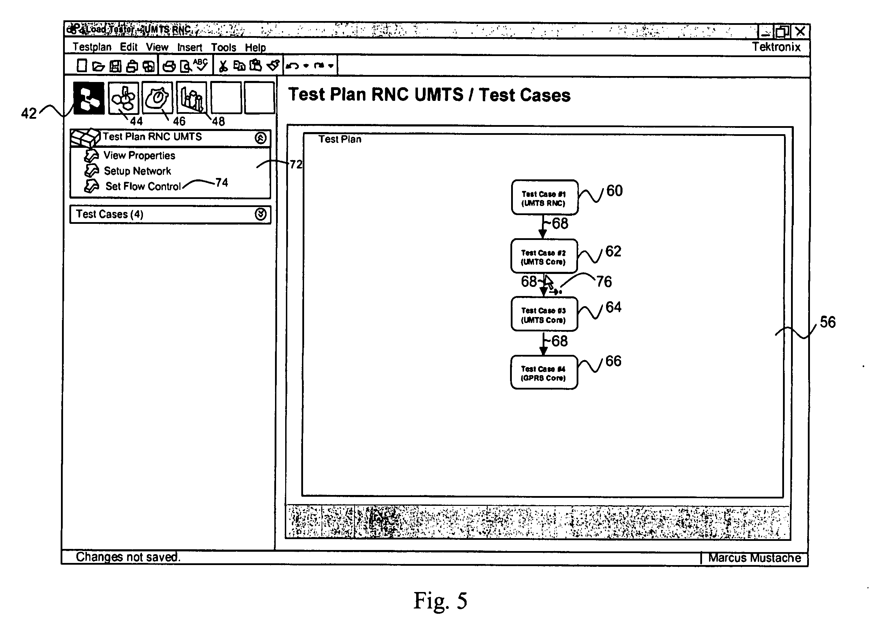

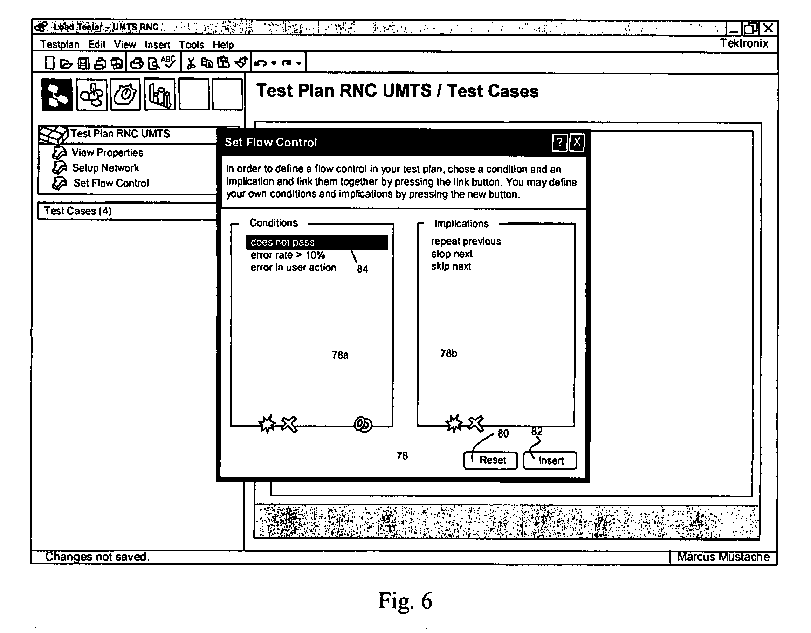

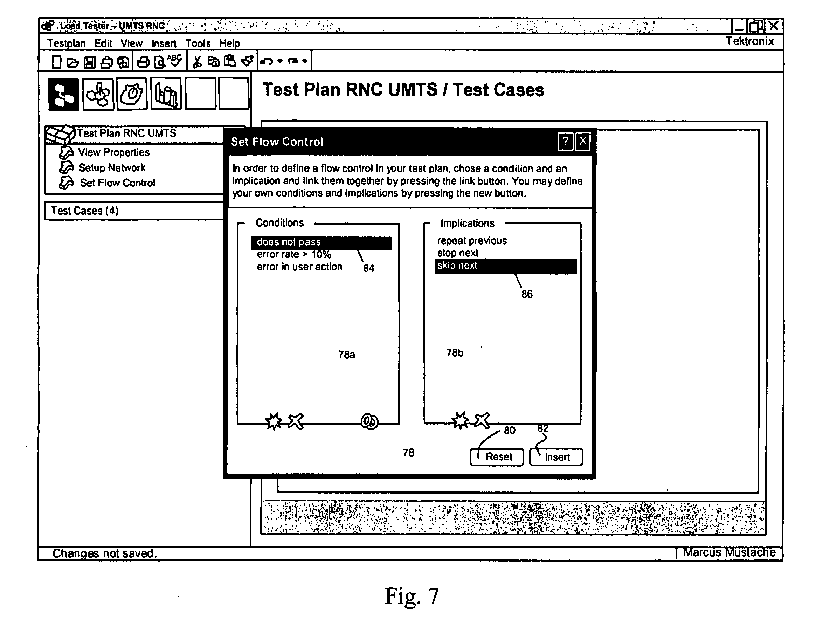

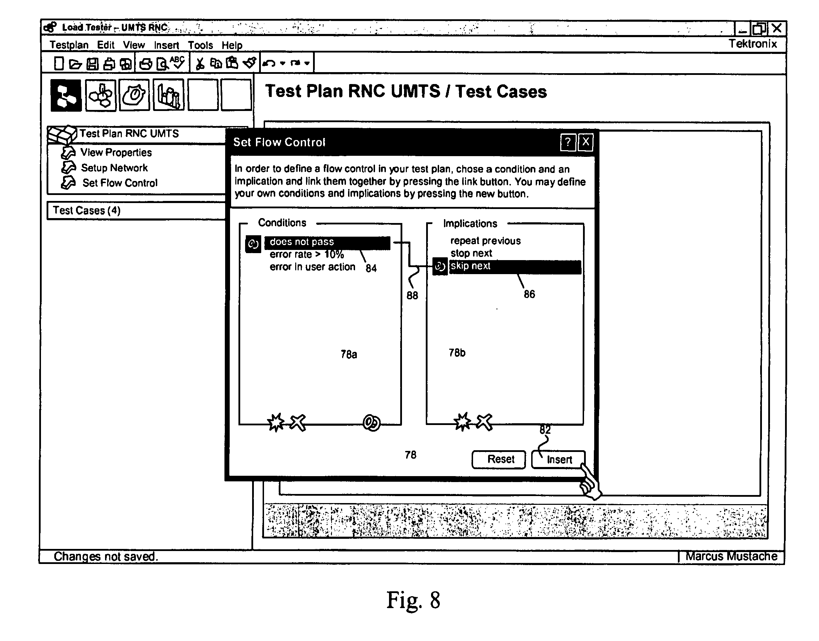

Von der Darstellung von Figur 2 kommt zur Darstellung von Figur 3 durch Anklicken der Funktionalität 70 in Figur 2. Daraufhin öffnet sich ein Fenster 72, siehe Figur 3, bei dem eine Funktionalität "Set Flow Control" 74 zur Modifikation der Ablaufsteuerung aktiviert werden kann. Durch Anklicken der Funktionalität 74 in Figur 3 erscheint ein Symbol 76, wie in Figur 4 wiedergegeben. Dieses Symbol 76 kann nunmehr über ein Zeigegerät, beispielsweise eine Computermaus, an die Stelle des im Fester 56 dargestellten Testplans verschoben werden, an der eine Bedingung eingebaut werden soll, vorliegend zwischen den Testcase #2 und den Testcase #3. Durch Positionieren des Symbols 76 auf der Verbindungslinie 68 zwischen Block 62 und Block 64 im Fenster 56 von Figur 5 und Bestätigen, beispielsweise durch Drücken einer Taste auf dem Zeigegerät, öffnet sich ein Fenster 78, siehe Figur 6, wobei in der linken Hälfe 78a eine Liste von Bedingungen angegeben ist, aus denen ausgewählt werden kann und in der rechten Hälfte 78b eine Liste von auswählbaren Folgen. Eine Funktionalität 80 ermöglicht einen Reset, d. h., ein Rückgängigmachen einer ausgewählten Bedingung, während über eine Funktionalität 82 ein Einfügen von Bedingung und Folge in den Testplan in Figur 56 bewirkt werden kann. Vorliegend wurde die Bedingung "do not pass" 84 durch Anklicken aktiviert. Daraufhin wird die Auswahl einer Folge im Fenster 78b, siehe Figur 7, ermöglicht. Vorliegend wurde die Folge "skip next" 86, d. h. "überspringe den nächsten Testcase" aktiviert, wobei die ausgewählte Bedingung und die ausgewählte Folge grafisch deutlich erkennbar durch eine Verbindungslinie 88 miteinander verknüpft werden, siehe Figur 8. Durch Aktivieren der Funktionalität 82 werden grafische Entsprechungen für die Bedingung und die Folge in Fenster 56 des Testplans eingebaut, siehe die Struktur 90. Mit anderen Worten wurde der Ablauf nunmehr dahingehend geändert, das Testcase #3 übersprungen wird, falls Testcase #2 nicht erfolgreich beendet wurde. All den im Fenster 56 dargestellten Symbolen sind Beschreibungsdateien zugeordnet, die von einem Prozessor zu einem ausführbaren Programm kompiliert werden.

Figur 10 zeigt eine Alternative zur Darstellung der Testcases zur Bildung eines Testplans und alternative Mittel zum Variieren der Reihenfolge der Testcases. Gemäß der Funktionalität 92 im Fenster 94 wurden vorliegend drei Testcases ausgewählt, die im Fenster 96 in der Reihenfolge der Auswahl angezeigt werden. In einem Fenster 98 sind Funktionalitäten bereitgestellt, die die Modifikation 100, das Neuerstellen 102, das Löschen 104, das nach oben Verschieben sowie das nach unter Verschieben eines im Fenster 96 ausgewählten Testcases ermöglichen. Vorliegend wurde, wie durch die Hinterlegung 110 erkennbar, der Testcase 100 K gewählt

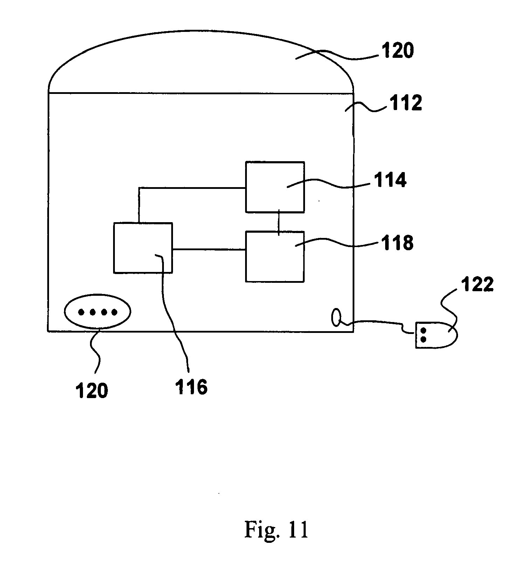

Die Figur 11 zeigt ein erfindungsgemäßes Lasttestgerät 112, das, wie durch den Henkel 120 angedeutet, tragbar ausgeführt ist, mit einer Anzeigeeinheit 114, einer Speichereinheit 116, einem Prozessor 118 sowie mehrere Anschlüsse 120 zum Anschließen an das zu testende Netzwerkelement. In der Speichereinheit 116 sind die Beschreibungsdateien für die am Fenster 56 dargestellten grafischen Symbole abgelegt; der Prozessor 118 fügt diese zu einem ausführbaren Testplan zusammen. Schließlich ist als Zeigegerät beispielhaft eine Maus 122 gezeigt, die an das erfindungsgemäße Lasttestgerät 112 angeschlossen ist.

Anstelle der in der Anmeldung erwähnten unterschiedlichen Farben können unterschiedliche Helligkeitsstufen einer Farbe oder bei monochromer Darstellung unterschiedliche Graustufen verwendet werden.

## Patentansprüche

1. Verfahren zur Erstellung eines Lasttests zum Testen eines Telekommunikationssystems, das eine Vielzahl von Netzwerkelementen und Subscribern umfasst, **gekennzeichnet durch** folgende an einem Lasttestgerät mit einer Anzeigeeinheit durchzuführende Schritte:
a) Anzeigen auf der Anzeigeeinheit (114) einer Vielzahl von Kennungen unterschiedlicher Testcases, wobei ein Testcase ein in sich abgeschlossener Testfall ist, der zumindest Angaben zum Aufbau des Telekommunikationssystems, zu Konfiguration der Netzwerkelemente und zu Aktionen der Subscriber umfasst und nach seinem Ablauf ein Testergebnis bereitstellt;
b) **durch** einen Benutzer: Auswählen der Kennung eines Testcases und Einfügen in eine auf der Anzeigeeinheit (114) dargestellte Benutzeroberfläche zur Erstellung eines Testplans, wobei sich ein Testplan zusammensetzt aus einer Vielzahl von Testcases; und
c) auf einer Benutzeroberfläche: Bereitstellen von Mitteln zum Einbau einer Bedingung in Abhängigkeit des Testergebnisses eines Testcases und einer zugehörigen Folge in die Abfolge der Testcases, mit folgenden Schritten:
c1) auf einer Benutzeroberfläche: Anzeigen einer Vielzahl von Bedingungen zur Auswahl **durch** den Benutzer; und
c2) nach Auswahl einer Bedingung **durch** den Benutzer: Anzeige einer Vielzahl von zu der ausgewählten Bedingung zugehöriger Folgen zur Auswahl **durch** den Benutzer.

2. Verfahren nach Anspruch 1,
**dadurch gekennzeichnet, dass**
die Schritte a) und b) bis zur Fertigstellung des Testplans wiederholt werden.

3. Verfahren nach Anspruch 1 oder 2,
**gekennzeichnet durch** folgenden weiteren Schritt:
d) auf einer Benutzeroberfläche: Bereitstellen von Mitteln zur Änderung der Reihenfolge der Kennungen des Testplans.

4. Verfahren nach einem der vorhergehenden Ansprüche,
**gekennzeichnet durch** folgenden weiteren Schritt:
e) Einbau graphischer Entsprechungen für die Bedingung und die Folge in den auf der Anzeigeeinheit dargestellten Testplan.

5. Verfahren nach einem der vorhergehenden Ansprüche,
**gekennzeichnet durch** folgenden weiteren Schritt:
f) auf einer Benutzeroberfläche: Bereitstellen von Mitteln zum Starten des Lasttests gemäß dem erstellten Testplan.

6. Lasttestgerät (112) zur Erstellung eines Lasttests zum Testen eines Telekommunikationssystems, das eine Vielzahl von Netzwerkelementen und Subscribern umfasst, wobei das Lasttestgerät (112) eine Anzeigeeinheit (114) aufweist,
**dadurch gekennzeichnet,**
**dass** das Lasttestgerät weiterhin umfasst:
- Mittel zum Anzeigen auf der Anzeigeeinheit (114) einer Vielzahl von Kennungen unterschiedlicher Testcases, wobei ein Testcase ein in sich abgeschlossener Testfall ist, der zumindest Angaben zum Aufbau des Telekommunikationssystems, zu Konfiguration der Netzwerkelemente und zu Aktionen der Subscriber umfasst und nach seinem Ablauf ein Testergebnis bereitstellt;
- Mittel zum Auswählen durch einen Benutzer der Kennung eines Testcases und Mittel zum Einfügen der Kennung in eine auf der Anzeigeeinheit (114) dargestellte Benutzeroberfläche zur Erstellung eines Testplans, wobei sich ein Testplan zusammensetzt aus einer Vielzahl von Testcases; und
- Mittel zum Einbau einer Bedingung in Abhängigkeit des Testergebnisses eines Testcases und einer zugehörigen Folge in die Abfolge der Testcases auf einer Benutzeroberlfäche; mit
- Mitteln zum Anzeigen einer Vielzahl von Bedingungen zur Auswahl durch den Benutzer auf einer Benutzeroberfläche; und
- Mitteln zum Anzeigen einer Vielzahl von zu der ausgewählten Bedingung zugehörigen Folgen zur Auswahl durch den Benutzer in Abhängigkeit von einer Auswahl einer Bedingung durch den Benutzer.

## Claims

1. Method for setting up a load test for testing a telecommunication system comprising a plurality of network elements and subscribers, **characterised by** the following steps to be performed on a load testing appliance having a display unit:
a) display on the display unit (114) of a plurality of IDs of different test cases, wherein a test case is a self-contained test case comprising at least information on the structure of the telecommunication system, on the configuration of the network elements and on actions of the subscribers and providing upon its completion a test result;
b) by a user: selection of the ID of a test case and insertion into a user interface shown on the display unit (114) for setting up a test plan, wherein a test plan is comprised of a plurality of test cases; and
c) on a user interface: provision of means for inserting a condition into the sequence of test cases as a function of the test result of a test case and an associated implication; including
c1) on a user interface: display of a plurality of conditions for selection by the user; and
c2) upon selection of a condition by a user: display of a plurality of implications belonging to the selected condition, for selection by the user.

2. Method according to claim 1,
**characterised in that**
steps a) and b) are repeated until completion of the test plan.

3. Method according to claims 1 or 2,
**characterised by** the following further step:
d) on a user interface: provision of means for changing the order of the IDs of the test plan.

4. Method according to one of the preceding claims,
**characterised by** the following further step:
e) insertion of graphical equivalents for the condition and the implication into the test plan shown on the display unit.

5. Method according to one of the preceding claims,
**characterised by** the following further step:
f) on a user interface: provision of means for starting the load test in accordance with test plan set up.

6. Load testing appliance (112) for setting up a load test for testing a telecommunication system comprising a plurality of network elements and subscribers, wherein the load testing appliance (112) exhibits a display unit (114),
**characterised in that**
the load testing appliance furthermore comprises:
- means for displaying on the display unit (114) a plurality of IDs of different test cases, wherein a test case is a self-contained test case comprising at least information on the structure of the telecommunication system, on the configuration of the network elements and on actions of the subscribers, and providing upon its completion a test result;
- means for the selection by a user of the ID of a test case, and means for inserting the ID into a user interface shown on the display unit (114) for setting up a test plan, wherein said test plan is comprised of a plurality of test cases; and
- means for inserting a condition into the sequence of test cases as a function of the test result of a test case and an associated implication on a user interface; including
- means for displaying a plurality of conditions for selection by the user on a user interface; and
- means for displaying a plurality of implications belonging to the selected condition for selection by a user as a function of a selection of a condition by the user.

## Revendications

1. Procédé pour élaborer des tests de charge pour tester un système de télécommunication, qui comprend une pluralité d'éléments de réseau et d'abonnés, **caractérisé par** les étapes suivantes à exécuter sur un dispositif de test de charge avec une unité d'affichage :
a) affichage sur l'unité d'affichage (114) d'une pluralité de caractéristiques de divers jeux d'essai, un jeu d'essai étant un cas d'essai indépendant qui comprend au moins des indications pour le montage du système de communication, pour la configuration des éléments de réseau et pour les interventions des abonnés et prépare un résultat d'essai après achèvement ;
b) par un utilisateur : sélection de la caractéristique d'un jeu d'essai et son insertion dans une interface utilisateur représentée sur l'unité d'affichage (114) pour l'élaboration d'un plan de test, un tel plan étant constitué d'une pluralité de jeux d'essai ; et
c) sur une interface utilisateur : préparation de moyens pour l'intégration d'une condition en fonction du résultat d'essai d'un jeu d'essai et d'une séquence correspondante dans la suite des jeux d'essai, avec les étapes suivantes :
c1) sur une interface utilisateur : affichage d'une pluralité de conditions à sélectionner par l'utilisateur ; et
c2) après la sélection d'une condition par l'utilisateur : affichage d'une pluralité de séquences faisant partie de la condition sélectionnée à sélectionner par l'utilisateur.

2. Procédé suivant la revendication 1, **caractérisé en ce que** les étapes a) et b) sont répétées jusqu'au parachèvement du plan de test.

3. Procédé suivant la revendication 1 ou 2, **caractérisé par** l'étape ultérieure suivante :
d) sur une interface utilisateur : préparation de moyens pour modifier l'ordre des caractéristiques du plan de test.

4. Procédé suivant l'une des revendications qui précèdent, **caractérisé par** l'étape ultérieure suivante :
e) intégration de correspondances graphiques pour la condition et la séquence dans le plan de test représenté sur l'unité d'affichage.

5. Procédé suivant l'une des revendications qui précèdent, **caractérisé par** l'étape ultérieure suivante :
f) sur une interface utilisateur : préparation de moyens pour le lancement des tests de charge conformément au plan de test élaboré.

6. Dispositif de test de charge (112) pour tester un système de télécommunication, qui comprend une pluralité d'éléments de réseau et d'abonnés, le dispositif de test de charge (112) présentant une unité d'affichage (114), **caractérisé en ce que** le dispositif de test de charge comprend en outre :
- des moyens pour l'affichage sur l'unité d'affichage (114) d'une pluralité de caractéristiques de divers jeux d'essai, un jeu d'essai étant un cas d'essai indépendant qui comprend au moins des indications pour le montage du système de télécommunication, pour la configuration des éléments de réseau et pour les interventions des abonnés et prépare un résultat d'essai après son achèvement;
- des moyens pour la sélection par un utilisateur de la caractéristique d'un jeu d'essai et des moyens pour l'insertion de la caractéristique dans une interface utilisateur présentée sur l'unité d'affichage (114) pour établir un plan de test, un tel plan étant constitué d'une pluralité de jeux d'essai ; et
- des moyens pour l'intégration d'une condition en fonction du résultat d'essai d'un jeu d'essai et d'une séquence correspondante dans la suite des jeux d'essai sur une interface utilisateur ; avec
- des moyens pour l'affichage d'une pluralité de conditions pour leur sélection par l'utilisateur sur une interface utilisateur ; et
- des moyens pour l'affichage d'une pluralité de séquences faisant partie de la condition sélectionnée pour leur sélection par l'utilisateur en fonction d'une sélection d'une condition par l'utilisateur.
